# EUROPÄISCHE PATENTANMELDUNG

(11) **EP 0 976 615 A2**
(43) Veröffentlichungstag der Anmeldung: **02.02.2000**
(21) Anmeldenummer: 99109505.0
(22) Anmeldetag: 12.05.1999
(51) Int. Cl.: B60R 5/04

(54) **Rückhaltevorrichtung zur Abtrennung eines Laderaums eines Fahrzeugs, z.B. eines Kombinations-Kraftwagens, einer Grossraumlimousine od. dgl.**

(30) Priorität: 27.07.1998 DE 19833571
(71) Anmelder: PETER BUTZ GmbH & Co Verwaltungs-KG, 40764 Langenfeld (DE)
(72) Erfinder: Labeur, Luc, 3010 Kessel-Lo (BE)
(74) Vertreter: Patentanwälte Ostriga & Sonnet

(57) **Zusammenfassung**

Eine Rückhaltevorrichtung (10) zur Abtrennung eines Laderaums (K) eines Fahrzeugs, wie z.B. eines Kombinations-Kraftwagens, einer Großraumlimousine od dgl., weist eine fahrzeugseitig befestigbare Basis (13) auf. Von der Basis (13) ist eine Werkstoffbahn (11) zumindest teilweise in etwa horizontaler Richtung zur Überdeckung des Laderaums (K) ausziehbar. Dabei ist die Werkstoffbahn (11) mit ihrem äußeren freien Randbereich (14) fahrzeugseitig lösbar (bei HT) zu befestigen und mit einem vom äußeren freien Randbereich (14) entfernten inneren Randbereich (15) bezüglich der Basis (13) oder bezüglich einer anderen fahrzeugseitig festen Stelle arretierbar.

Eine zusätzliche Verwendungsweise einer Werkstoffbahn (11) ist dadurch möglich geworden, daß an der unteren (20) und/oder an der oberen (19) Hauptfläche der Werkstoffbahn, der Hauptbahn (11), mit ihrem inneren Teilbahnrand (16, 16') eine Werkstoff-Teilbahn (17, 17') befestigt ist, deren dem inneren Teilbahnrand (16, 16') paralleler freier äußerer Teilbahnrand (18, 18') fahrzeugseitig lösbar zu befestigen ist.

## Beschreibung

Die Erfindung betrifft eine Rückhaltevorrichtung entsprechend dem Oberbegriff des Anspruchs 1.

Derartige Rückhaltevorrichtungen sind bekannt, beispielsweise in Form eines aus einem Rollogehäuse entgegen dem Rückzugsmoment einer Federmotor-Wickelwelle ausziehbaren, etwa horizontal aufspannbaren Rollos (vgl. DE 40 13 158 C2) oder in Gestalt einer an etwa horizontal verlaufenden Führungsschienen geführten Faltplane (vgl. DE 33 14 444 C2).

Gemäß einer anderen Gattung von Rückhaltevorrichtungen ist ein Doppelrollogehäuse bekannt (vgl. DE 36 30 195 A1), das einerseits eine von einer ersten Federmotor-Wickelwelle abziehbare horizontal aufspannbare Rollobahn und andererseits eine von einer zweiten Federmotor-Wickelwelle abziehbare und vertikal aufspannbare Netzbahn enthält. Gegenüber den erstgenannten Rückhaltevorrichtungen (DE 40 13 158 C2; DE 33 14 444 C2) hat die Rückhaltevorrichtung gemäß der DE 36 30 195 A1 den Vorteil, daß nicht nur eine horizontal aufspannbare Rollobahn, sondern für bestimmte Anwendungsfälle alternativ oder kombinierbar auch eine vertikal aufspannbare Netzbahn zur Verfügung steht. Andererseits ist die Doppelrollo-Rückhaltevorrichtung gemäß der DE 36 30 195 A1 mit dem Nachteil eines verhältnismäßig großen technischen Aufwandes und eines relativ großen Bauvolumens behaftet.

Von der DE 27 49 560 A1 ist eine von einer Federmotor-Wickelwelle vertikal abzieh- und aufspannbare Werkstoffbahn, die auch von einer Netzbahn gebildet sein kann, bekannt. Dabei weist die Wickelwelle noch die Besonderheit eines Klinkengesperres auf, welches ein Abrollen der Netzbahn nur bei gelöster Sperrklinke gestattet.

Von der DE 44 08 484 C2 schließlich ist eine gehäuselose zusammenrollbare oder zusammenfaltbare Netzbahn bekannt, welche sich zwischen einer unteren und einer den fahrzeugseitigen Dachholmen benachbarten oberen Haltestange vertikal aufspannen und lösbar befestigen läßt.

Ausgehend von der eingangs beschriebenen gattungsgemäßen Rückhaltevorrichtung (DE 40 13 158 C2; DE 33 14 444 C2), liegt der Erfindung die Aufgabe zugrunde, eine derartige Rückhaltevorrichtung, die entweder eine horizontal aufspannbare Rollobahn oder eine horizontal aufspannbare Faltbahn aufweist, mit einfachen raumsparenden Mitteln so weiterzuentwickeln, daß alternativ oder kombinierbar eine zusätzliche Rückhaltevorrichtung, beispielsweise eine netzartige Werkstoffbahn, zur Anwendung gelangen kann.

Gemeinsam mit den Merkmalen des Oberbegriffs des Anspruchs 1 löst die Erfindung diese Aufgabe dadurch, daß an der unteren und/oder an der oberen Hauptfläche der Werkstoffbahn, der Hauptbahn, mit ihrem inneren Teilbahnrand mindestens eine Werkstoff-Teilbahn befestigt ist, deren dem inneren Teilbahnrand paralleler freier äußerer Teilbahnrand fahrzeugseitig lösbar zu befestigen ist.

Entsprechend der Erfindung wird die untere und/oder die obere Hauptfläche der Werkstoffbahn, beispielsweise einer Rollo-Tuchbahn oder einer Faltplane, als Befestigungsstelle für den inneren Teilbahnrand mindestens einer Werkstoff-Teilbahn benutzt.

So kann beispielsweise die obere Hauptfläche einer horizontal aufgespannten Rollobahn an ihrem dem Rollogehäuse benachbarten inneren Randbereich die Befestigungsstelle für den inneren Teilbahnrand einer Netzbahn bilden, deren freier äußerer Teilbahnrand zweckmäßig mittels einer Haltestange an oder benachbart den fahrzeugseitigen Dachholmen lösbar zu befestigen ist. Bei diesem Anwendungsfall befinden sich also aufgespannte Rollobahn und aufgespannte Netzbahn kombiniert im Einsatz.

Andererseits gestattet die Erfindung z.B. auch die Möglichkeit, die Befestigungsstelle für den inneren Teilbahnrand an der oberen Hauptfläche der Hauptbahn benachbart deren äußerem Randbereich anzuordnen. Hierdurch ist die Möglichkeit gegeben, bei aufgerollter Hauptbahn alternativ zu letzterer die Teilbahn beispielsweise vertikal als Netzbahn aufzuspannen und fahrzeugseitig zu befestigen.

Dabei ist es sinnvoll, daß die Hauptbahn gegen unbeabsichtigtes Abwickeln von der Wickelwelle gesichert ist, was beispielsweise mit einem Klinkengesperre gemäß der DE 27 49 560 oder einer ähnlichen Vorrichtung geschehen kann. Für den Fall, daß bei dem letztgenannten Anwendungsbeispiel die Hauptbahn horizontal aufgespannt werden soll, könnte die nicht benutzte Teilbahn auf der oberen Hauptfläche am äußeren Randbereich der Hauptbahn verbleiben und dort lose ausgebreitet werden.

Andererseits besteht erfindungsgemäß auch die Möglichkeit, die Teilbahn benachbart dem äußeren Randbereich der Hauptbahn an deren unterer Hauptfläche zu befestigen. In einem solchen Fall könnte bei aufgewickelter Hauptbahn die z.B. netzartige Teilbahn vertikal so aufgespannt werden, daß der verbleibende äußere Randbereich der Hauptbahn zwischen der vertikal aufgespannten Teilbahn und dem Rollogehäuse verbliebe. Letztgenannte Ausführungsform hätte den Vorteil, daß die Teilbahn bei Nichtgebrauch und horizontal aufgespannter Hauptbahn unsichtbar, und zwar von der Hauptbahn verdeckt, angeordnet wäre.

In weiterer Ausgestaltung der Erfindung ist die Teilbahn an der Hauptbahn lösbar, z.B. mittels einer Schnürverbindung, einer Steckverbindung oder einer Reißverschlußverbindung, zu befestigen. Bei der Verwendung eines Reißverschlusses, der als Rillenverschluß, Gleitverschluß, Spiralverschluß oder Zahnverschluß ausgebildet sein kann, ist es zweckmäßig, eine oder mehrere Reißverschlußhälften an einer Hauptfläche oder an beiden Hauptflächen der Hauptbahn bleibend zu befestigen und bei Bedarf an gewünschter Stelle der Hauptbahn den inneren Teilbahnrand mit seiner komplementären Reißverschlußhälfte anzufügen. Vorteilhaft ist, daß bei abgenommener Teilbahn an der Hauptbahn befestigte Verschlußhälften das Einrollen oder Einfalten der Hauptbahn praktisch nicht behindern.

Für den Fall, daß als Hauptbahn eine Einfaltbereiche bildende Abdeckplane mit endseitig an Führungsschienen geführten Tragestäben zur Verwendung gelangt, ist es zweckmäßig, die Teilbahn benachbart je eines Tragestabes an der Hauptbahn zu befestigen um über die Teilbahn eine hinreichende Zugkraftaufnahme zu gewährleisten.

Weiterhin hat es sich als zweckmäßig erwiesen, besonders dann, wenn die Haltestange vom freien äußeren Teilbahnrand gelöst ist, die Teilbahn gemeinsam mit der Hauptbahn zur Basis hin zusammenzufalten oder aufzuwickeln.

In den Zeichnungen sind bevorzugte Ausführungsbeispiele entsprechend der Erfindung näher dargestellt, es zeigt,
Fig. 1 eine horizontal aufgespannte Rollobahn mit einer sich in Nichtgebrauchsstellung befindlichen Teilbahn und
Fig. 2 die aufgewickelte Rollobahn mit der sich in ihrer Gebrauchsstellung befindlichen vertikal aufgespannten Teilbahn.

Eine insgesamt mit 10 bezeichnete Rückhaltevorrichtung weist eine textile Rollobahn 11 auf, welche von einer Federmotor-Wickelwelle entgegen der Rückstellkraft des Federmotors in Ausziehrichtung a etwa horizontal oberhalb des Laderaums K eines Kombinationskraftwagens ausziehbar und mittels einer Haltestange H an nicht dargestellten fahrzeugseitigen Befestigungsstellen lösbar zu befestigen ist.

Die nicht dargestellte Wickelwelle ist in einem hinter der Fondsitzlehne 12 insbesondere lösbar zu befestigenden Rollogehäuse 13 angeordnet.

Die Rollobahn 11, die Hauptbahn, weist benachbart der Haltestange H einen äußeren freien Randbereich 14 und benachbart dem Rollogehäuse 13 einen inneren Randbereich 15 auf.

Benachbart dem äußeren freien Randbereich 14 ist der innere Teilbahnrand 16 einer von einer Netzbahn 17 gebildeten Werkstoff-Teilbahn befestigt. Dem äußeren Teilbahnrand 18 der Teilbahn 17 ist eine Haltestange HT zugeordnet.

Der innere Teilbahnrand 16 der Teilbahn 17 kann entweder unlösbar, z.B. mittels einer Fadennaht oder mittels einer Schweißnaht an der Rollobahn (Hauptbahn) 11 befestigt sein.

Ebenso besteht die Möglichkeit, auf der oberen Hauptfläche 19 der Rollobahn 11 eine Reißverschlußhälfte bleibend zu befestigen und die komplementäre Reißverschlußhälfte am inneren Teilbahnrand 16 zu befestigen. Auf diese Weise können beide Reißverschlußhälften im Bedarfsfalle zu einem Reißverschluß R vereinigt und so eine lösbare Befestigung der Teilbahn 17 an der Rollobahn 11 herbeigeführt werden.

Kombinierbar oder alternativ besteht auch die Möglichkeit, unterhalb der auf der oberen Hauptfläche 19 befindlichen Befestigungsstelle an der unteren Hauptfläche 20 der Rollobahn 11 den inneren Teilbahnrand 16' einer Teilbahn 17', deren äußerer Teilbahnrand mit 18' bezeichnet ist, zu befestigen. Die Befestigung der Teilbahn 17' kann bleibend oder ebenfalls mit Hilfe eines dem Reißverschluß R gleichenden oder ähnlichen Reißverschlusses lösbar erfolgen. Auch der äußere Teilbahnrand 18' ist mit einer Haltestange HT' versehen.

Die Haltestangen HT bzw HT' können gegebenenfalls auch von der Teilbahn 17, 17' lösbar sein, um ein gemeinsames Einrollen von Hauptbahn 11 und Teilbahn 17, 17' für den Fall zu ermöglichen, daß die Teilbahn 17, 17' benachbart dem Rollogehäuse 13 angeordnet sein sollte.

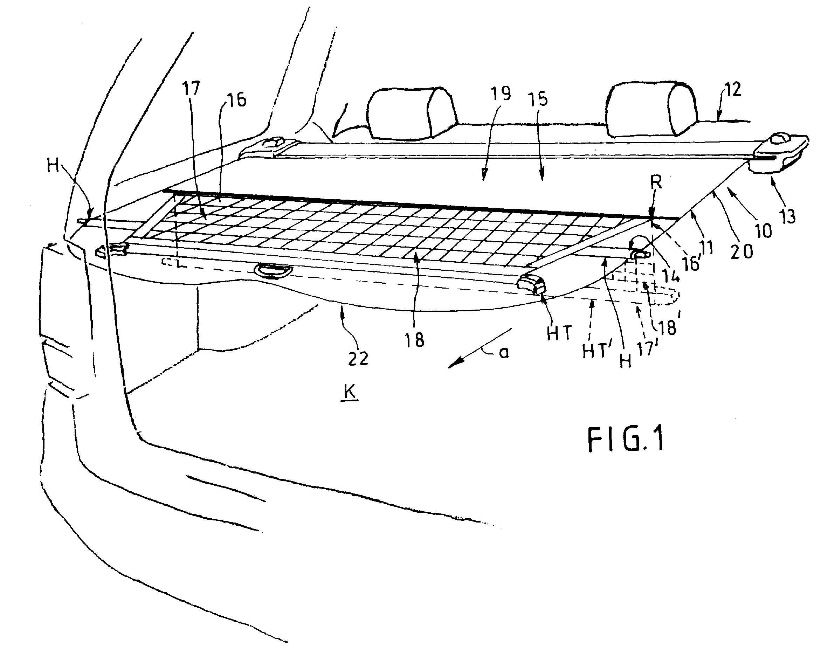

Entsprechend dem in Fig. 1 dargestellten Ausführungsbeispiel ist die Teilbahn 17 bei Nichtgebrauch benachbart dem äußeren freien Randbereich 14 auf der oberen Hauptfläche 19 der Hauptbahn 11 ausgebreitet. Im Vergleich dazu kann die Teilbahn 17' von der unteren Hauptfläche 20 frei herabhängen.

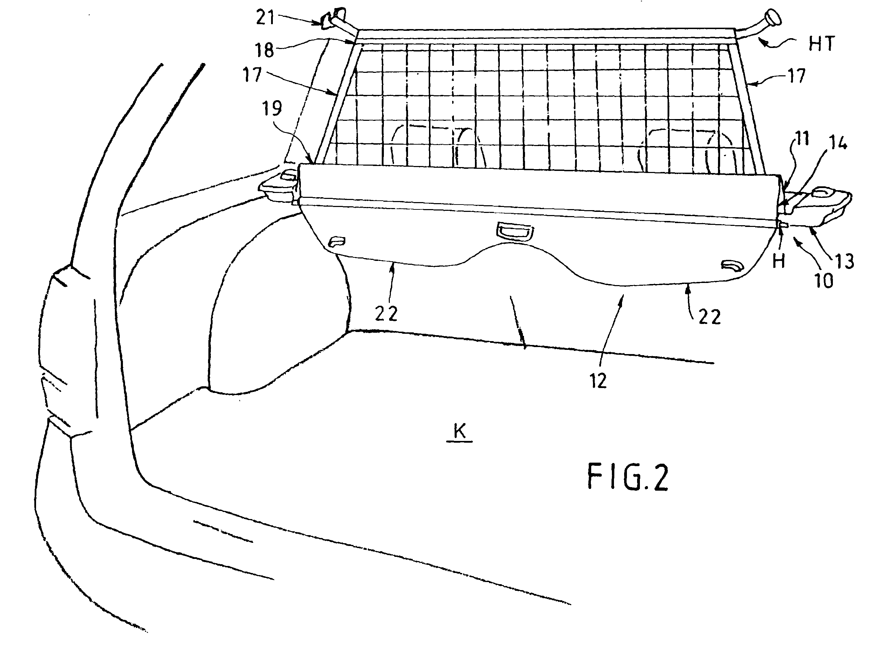

Für den Fall, daß die Hauptbahn 11 gemäß Fig. 2 von der Wickelwelle aufgerollt wird, besteht die Möglichkeit, die Teilbahn 17 vertikal aufzuspannen und mittels der Haltestange HT an etwa schuhartigen dachholmseitigen Halteaufnahmen 21 lösbar zu befestigen.

Wie aus Fig. 2 zu ersehen, hängt dabei der steife Endbereich, der sogenannte "Flap" 22, frei nach unten. Für den Fall, daß in nicht gezeigter Weise die an der unteren Hauptfläche 20 der Rollobahn 11 befestigte Teilbahn 17' zur Verwendung gelangen und vertikal aufgespannt werden sollte, würde der Flap 22 hochgeschlagen und die Teilbahn 17', vergleichbar der Teilbahn 17, dachholmseitig lösbar befestigt.

Die Befestigungsstelle des inneren Teilbahnrandes 16, 16' an der Hauptbahn 11 verläuft zweckmäßig linear und quer zur Ausziehrichtung a.

## Patentansprüche

1. Rückhaltevorrichtung (10) zur Abtrennung eines Laderaums (K) eines Fahrzeugs, wie z.B. eines Kombinations-Kraftwagens, einer Großraumlimousine od. dgl., mit einer fahrzeugseitig befestigbaren Basis (13) der Rückhaltevorrichtung (10), wobei von der Basis (13) eine Werkstoffbahn (11) zumindest teilweise in horizontaler Richtung zur Überdeckung des Laderaums (K) ausziehbar, dabei mit ihrem äußeren freien Randbereich (14) fahrzeugseitig lösbar zu befestigen und mit einem vom äußeren Randbereich (14) entfernten inneren Randbereich (15) bezüglich der Basis (13) oder bezüglich einer anderen fahrzeugseitig festen Stelle arretierbar ist, dadurch gekennzeichnet, daß an der unteren (20) und/oder an der oberen (19) Hauptfläche der Werkstoffbahn, der Hauptbahn (11), mit ihrem inneren Teilbahnrand (16, 16') mindestens eine Werkstoff-Teilbahn (17, 17') befestigt ist, deren dem inneren Teilbahnrand (16, 16') paralleler freier äußerer Teilbahnrand (18, 18') fahrzeugseitig lösbar zu befestigen ist.

2. Rückhaltevorrichtung nach Anspruch 1, dadurch gekennzeichnet, daß die Teilbahn (17, 17') an der Hauptbahn (11) lösbar, wie z.B. mittels einer Schnürverbindung, einer Steckverbindung oder einer Reißverschlußverbindung (R), zu befestigen ist.

3. Rückhaltevorrichtung nach Anspruch 1 oder nach Anspruch 2, dadurch gekennzeichnet, daß die Teilbahn (17, 17') benachbart dem inneren (15) und/oder dem äußeren (14) Randbereich der Hauptbahn (11) zu befestigen ist.

4. Rückhaltevorrichtung nach einem der Ansprüche 1 bis 3, dadurch gekennzeichnet, daß die Teilbahn (17, 17') eine Netzbahn ist.

5. Rückhaltevorrichtung nach einem der Ansprüche 1 bis 4, dadurch gekennzeichnet, daß bei einer Einfaltbereiche bildenden Abdeckplane mit endseitig an Führungsschienen geführten Tragestäben die Teilbahn (17, 17') benachbart je eines Tragestabes an der Hauptbahn (11) zu befestigen ist.

6. Rückhaltevorrichtung nach einem der Ansprüche 1 bis 5, dadurch gekennzeichnet, daß die Teilbahn (17, 17') gemeinsam mit der Hauptbahn (11) zur Basis (13) hin zusammenfalt- oder aufwickelbar ist.

7. Rückhaltevorrichtung nach einem der Ansprüche 1 bis 6, dadurch gekennzeichnet, daß der freie äußere Teilbahnrand (18, 18') oberhalb des inneren Teilbahnrandes (16, 16') an oder benachbart den fahrzeugseitigen Dachholmen lösbar zu befestigen ist.
